(19)

**Europäisches Patentamt**
**European Patent Office**
**Office européen des brevets**

(11) **EP 2 200 029 A1**

(12) **EUROPEAN PATENT APPLICATION**

(43) Date of publication:
**23.06.2010 Bulletin 2010/25**

(51) Int Cl.:
***G11B 20/00*** *(2006.01)*

(21) Application number: **08305995.6**

(22) Date of filing: **22.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **ST-NXP Wireless France**
**38000 Grenoble (FR)**

(72) Inventors:
• **Sibert, Hervé**
  **72000 Le Mans (FR)**
• **Pfeffer, Matthias**
  **90766 Fuerth (DE)**

(74) Representative: **Zapalowicz, Francis**
**Casalonga & Partners**
**Bayerstrasse 71/73**
**80335 München (DE)**

(54) **Method and device for storing and transferring paged data, in particular paged code in a virtual memory mechanism**

(57) Method of storing paged data in a storage memory (SM), said paged data being included in first memory pages (MMUi) having a first memory page size (MMUS), said storage memory (SM) including storage memory pages (SMPi) having a second memory page size (SMPS), comprising compressing (1) separately the content of each first memory page (MMUi) into a compressed chunk (CCi), comparing each compressed chunk size (CCSi) to said first memory page size (MMUS), and if the size (CCSi) of a compressed chunk (CCi) is strictly smaller than said first memory page size (MMUS), storing (3) said compressed chunk (CCi) in a number of storage memory pages (SMPi) smaller than or equal to ceil(r), where r is the ratio between said first memory page size (MMUS) and said second memory page size (SMPS); whereas if the size (CCSi) of a compressed chunk (CCi) is greater than said first memory page size (MMUS), storing (3) directly the uncompressed content of said first memory page (MMUi) in a number of storage memory pages (SMPi) equal to ceil(r); and whereas if the size (CCSi) of a compressed chunk (CCi) is equal to said first memory page size (MMUS), storing (3) said compressed chunk (CCi), or storing (3) directly the uncompressed content of said first memory page (MMUi), in a number of storage memory pages (SMPi) equal to ceil(r).

FIG.1

EP 2 200 029 A1

**Description**

The invention relates to data processing, especially compressing, storing and transferring paged data in different memory means of an electronic device, in particular provided with virtual memory mechanism.

The invention can be applied in any electronic device using memory means for storing and transferring paged data, for example but in a non limitative way, in a wireless communication apparatus, as for example a cellular mobile phone.

Memory of an electronic device can be divided into memory pages, a memory page being the smallest unit of access to memory. A memory page contains data, also called paged data. Electronic device can include different types of memory for different uses. Generally speaking, electronic device use a working memory including working memory pages to store paged data when executing process at boot or at runtime. The majority of electronic device use a "RAM" or Random Access Memory as working memory. The memory pages included in working memory are also called "MMU" pages, or Memory Management Unit pages, as they are managed by a MMU in a virtual memory mechanism.

Besides, paged data have to be stored in a storage memory to keep data when electronic device is off. For example, storage memory can be an embedded flash memory or a hard disk. This storage memory includes memory pages as well.

The MMU manages paged data by transferring memory pages between memories thanks to a technique called "paging". The principle of paging consists in loading memory pages from storage memory, also called mass storage memory, to working memory only when the data in these memory pages are needed. Paging can avoid loading, at boot, data that are rarely used, thus freeing more working memory for process execution.

When data located at a memory address, in working memory pages, are invoked by process, and the corresponding memory page is not founded, a page fault occurs which triggers the loading of the memory page from storage memory to working memory. When memory page is loaded, data can be used by said process.

Besides, in order to save space in storage memory, manufacturers compress data to store compressed data in storage memory. For compressing data that must be loaded in working memory at boot or when the electronic device is running, said compressed data can be compressed using usual compression algorithm.

Moreover the memory access time for accessing data stored in memory depends on the number of memory pages that must be accessed to retrieve data. This number of memory pages to be accessed is also noted the number of read accesses to memory. Generally speaking, storage memory includes storage memory pages which may have a different size from the size of working memory pages. In this case the memory access time can be different depending on the number of read accesses to memory. It is also suitable that compression does not degrade storage memory access time.

Thus, it is useful to improve compression while preventing the degradation of memory access time.

A known solution consists in maximizing the compression rate using the same compression algorithm as in the case of non-paged data. The data to be compressed are divided into compressed chunks which are stored into one or several storage memory pages. As MMU page size can be greater than storage memory page size, compressed chunks stored in storage memory pages are not aligned on uncompressed data in MMU pages. In other words, compressed chunks can be stored in more storage memory pages than if paged data were stored uncompressed in said storage memory. In this case, it is required to read more storage memory pages than if paged data were stored uncompressed to retrieve the MMU page content, degrading therefore the memory access time.

In the case of paged code, it is necessary to access quickly to uncompressed code, at boot or during runtime. Ideally, the number of read accesses to storage memory during a page fault should not be higher in the case of a compressed paged code than in the case of an uncompressed page code.

According to an embodiment, it is proposed a method for storing paged data in a storage memory allowing an improvement of the number of read accesses to said storage memory at boot or during runtime of an electronic device.

In particular, it is proposed a method allowing an improvement of memory access time when compressed data are stored in a storage memory, improving the concatenation of compressed paged data into storage memory pages.

According to an aspect, a method for storing paged data, in particular read-only paged data as for example paged code, in a storage memory is proposed, said paged data being included in first memory pages having a first memory page size, said storage memory including storage memory pages having a second memory page size, and said method comprising compressing separately the content of each first memory page into a compressed chunk; said method further comprises comparing each compressed chunk size to said first memory page size, and if the size of a compressed chunk is strictly smaller than said first memory page size, storing said compressed chunk in a number of storage memory pages smaller than or equal to ceil(r), where r is the ratio between said first memory page size and said second memory page size; whereas if the size of a compressed chunk is greater than said first memory page size, storing directly the uncompressed content of said first memory page in a number of storage memory pages equal to ceil (r).

Thus, reading all the compressed chunks necessary to retrieve the content of an uncompressed content of a MMU page does not require more reading accesses than if said MMU page content was stored in uncompressed storage memory. This permits to store a string including concatenated compressed chunks in a minimum of storage memory pages.

Moreover, it is possible to store said compressed chunks in storage memory in a way such that it limits the number of read accesses to said storage memory.

If the size of a compressed chunk is equal to said first memory page size, two possibilities are offered, either storing said compressed chunk, or storing directly the uncompressed content of said first memory page, in a number of storage memory pages equal to ceil(r).

Said method further comprises preferably elaborating a mapping table containing mapping information between the location of a compressed chunk, or an uncompressed content, within said storage memory and the corresponding first memory page, and storing said mapping table in said storage memory.

Several embodiments are possible to implement this aspect of the invention.

In particular the two following embodiments share the following characteristics:

- each content of first memory pages is compressed separately
- for each paged data (or binary), the mapping table is used to retrieve the right compressed chunk (i.e. the storage memory pages that it is stored into) given the address of a first memory page. This mapping table permits to avoid a reading of the whole storage memory for retrieving the right compressed chunk. This mapping table is for example stored within the compressed binary, and will be preferably shadowed at boot time in order to avoid reading it from the storage memory when paging is invoked. Shadowing at boot time consists in loading binary data into a working memory in order to use it during runtime.

According to one of these two embodiments, said storing step may comprise defining a set of reference sizes; the size of each compressed chunk is compared to said reference sizes; and if the size of said compressed chunk equals one of said reference sizes, said compressed chunk is directly stored in said storage memory pages, whereas if the size of said compressed chunk does not equal one of said reference sizes, said storing step further comprises padding said compressed chunk with padding data to reach the nearest upper reference size and storing said padded compressed chunk in said storage memory pages.

According to another of these two embodiments, said storing step may comprise storing all the uncompressed contents in the beginning storage memory pages and ordering the remaining compressed chunks before storing them in the following storage memory pages.

Preferably, said ordering step comprises elaborating a data string including concatenated remaining compressed chunks.

According to another aspect, a method for transferring paged data, in particular read-only paged data as for example paged code, from a storage memory to a first memory is proposed, said first memory including first memory pages having a first memory page size, and said storage memory including storage memory pages having a second memory page size; said paged data are stored in said storage memory pages and include compressed chunks or uncompressed contents; said method comprises, for each first memory page, accessing said storage memory with a number of read accesses smaller than or equal to ceil(r), where r is the ratio between said first memory page size and said second memory page size, and storing directly each read uncompressed content in said first memory page or decompressing each read compressed chunk before storing the corresponding decompressed chunk in said first memory page.

Said method further comprises preferably providing a mapping table stored in said storage memory pages, said mapping table containing mapping information between the location of a compressed chunk, or an uncompressed content, within said storage memory and the corresponding first memory page, and said method comprises retrieving the right compressed chunk or uncompressed content stored in said storage memory pages by using said mapping table.

Advantageously, said mapping table may be shadowed at boot time.

According to another embodiment, said paged data may have been stored in said storage memory by using the method of storing defined above.

According to another aspect, a device for transferring paged data, in particular read-only paged data as for example paged code, from a storage memory to a first memory is proposed, said first memory including first memory pages having a first memory page size, and said storage memory including storage memory pages having a second memory page size; said paged data are stored in said storage memory pages and include compressed chunks or uncompressed contents; said device comprising means configured to access, for each first memory page, said storage memory with a number of read accesses smaller than or equal to ceil(r), where r is the ratio between said first memory page size and said second memory page size, means configured to store directly each read uncompressed content in said first memory page and means configured to decompress each read compressed chunk before storing the corresponding decompressed chunk in said first memory page.

According to an embodiment, said device may include a mapping table stored in said storage memory pages, said mapping table containing mapping information between the location of a compressed chunk, or an uncompressed content, within said storage memory and the corresponding first memory page, and said accessing means are further configured to retrieve the right compressed chunk or uncompressed content stored in said storage memory pages by using said mapping table.

Said accessing means are further configured to access said mapping table at boot time.

According to another embodiment, said storage memory comprises paged data having been stored in said storage memory by using the method of storing defined above.

According to another aspect, a wireless communication apparatus is proposed, comprising a device as defined above.

Said wireless communication apparatus may be a cellular mobile phone.

Other advantages and features of the invention will appear on examining the detailed description of embodiments, these being in no way limiting and of the appended drawings in which:

- figures 1 to 6 illustrate diagrammatically examples of a method of storing according to the invention;
- figures 7 and 8 illustrate diagrammatically examples of a method of transferring according to the invention;
- figure 9 illustrates diagrammatically an embodiment of a device according to the invention; and
- figure 10 illustrates diagrammatically an example of a wireless communication apparatus incorporating an embodiment of a device according to the invention.

In the drawings, like numbers refer to like objects throughout. Objects in the diagrams are not necessarily drawn to scale.

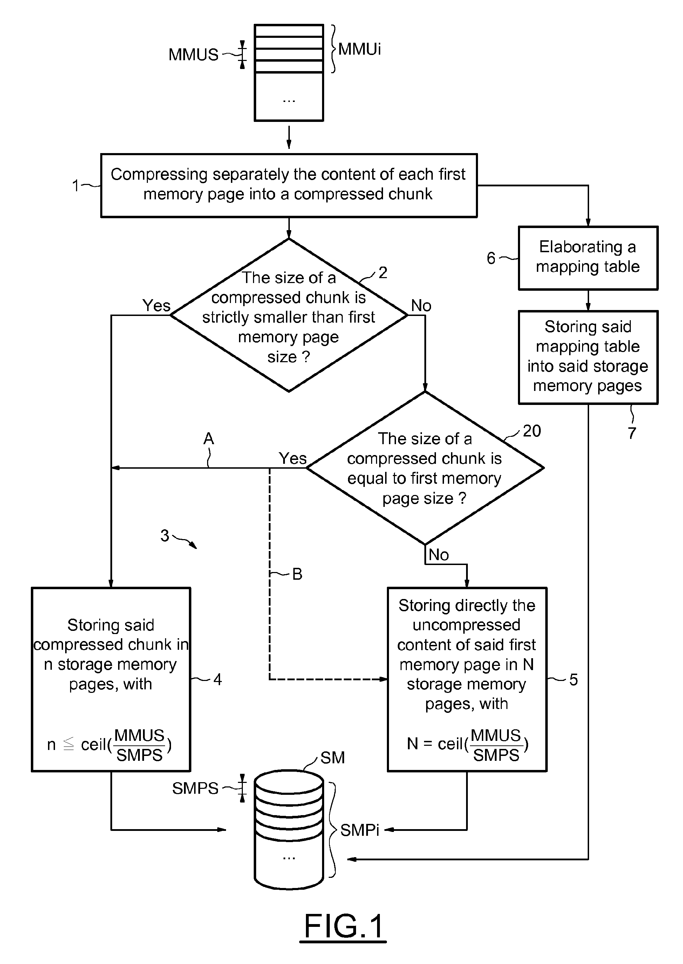

In figure 1 embodiments of a method of storing paged data, in particular read-only paged data as for example paged code, in a storage memory SM is diagrammatically illustrated, which is particularly suitable for paging in a virtual memory mechanism.

Said paged data are included in several first memory pages MMUi having a first memory page size MMUS.

Said storage memory SM includes several storage memory pages SMPi having a second memory page size SPMS.

The method of storing comprises a compressing step 1 wherein the content MMUCi of each first memory page is compressed separately into a compressed chunk CCi. Because first memory pages MMUi may have different contents MMUCi, compression step 1 may provide different compressed chunks CCi having respectively different sizes CCSi.

In particular, a compressed chunk CCi can have a size CCSi equal to or greater than the first memory page size MMUS. This result can happen when first memory page content is not adapted for compression, or compression algorithm compresses badly.

Further, this method of storing comprises a comparing step 2 for comparing each compressed chunk size CCSi to said first memory page size MMUS and a storing step 3 for storing said compressed chunks CCi or said first memory pages contents MMUCi to one or several storage memory pages SMPi.

If the size CCSi of a compressed chunk CCi is strictly smaller than said first memory page size MMUS, said compressed chunk CCi is stored 4 in a number of storage memory pages smaller than or equal to ceil(r).

If the size CCSi of a compressed chunk CCi is equal to said first memory page size MMUS (step 20), two embodiments are possible.

In a first embodiment, referenced A, said compressed chunk CCi is stored 4 in a number of storage memory pages smaller than or equal to ceil(r).

In a second embodiment, referenced B, the uncompressed content MMUCi of said first memory page is directly stored in a number of storage memory pages equal to ceil(r).

If the size CCSi of a compressed chunk CCi is greater than said first memory page size MMUS, the uncompressed content MMUCi of said first memory page is directly stored 5 in a number of storage memory pages equal to ceil(r).r is the ratio between said first memory page size MMUS and said second memory page size SMPS, that is to say $r = MMUS/SMPS$; and

ceil(r) is the mathematical function that returns the ceiling of r as a float, in other words it returns the smallest integer value greater than or equal to r.

There is no difference here whether r is smaller than, greater than, or equal to 1.

A mapping table MT is also elaborated. This mapping table MT will be used to retrieve the right compressed chunk CCi, or the right uncompressed content MMUCi into the storage memory SM by giving the address of a first memory page MMUi. Thus, the mapping table MT contains mapping information between the location of a compressed chunk CCi, or an uncompressed content MMUCi within said storage memory SM and the corresponding first memory page MMUi.

Said mapping table MT is for example stored 7 into said storage memory pages SMPi.

Several variants can be used to store said compressed chunks CCi or said uncompressed contents MMUCi into a number of storage memory pages SMPi smaller than or equal to ceil(r). Two variants will be now described in details thereafter.

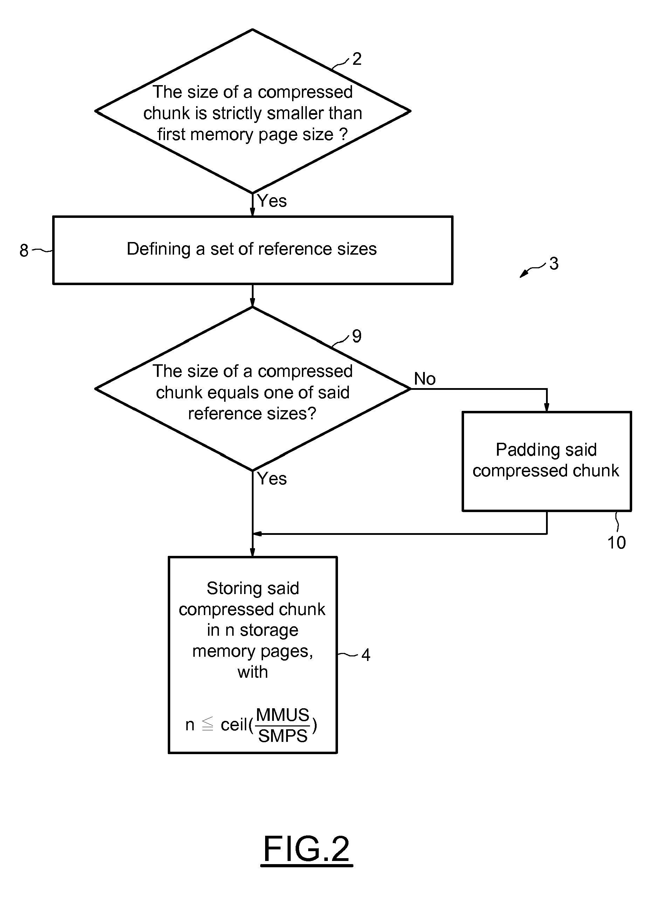

According to a first variant, illustrated more particularly in figure 2, a set of several reference sizes RSi, i.e. predefined sizes, is defined 8.

As explained above, the content MMUCi of each first memory page MMUi is compressed separately into a compressed chunk CCi.

The compressed chunk size CCSi is then compared 9 to all of the reference sizes RSi included in the set.

In this first variant, if the size of a compressed chunk does not equal one of the reference sizes, said compressed chunk CCi is padded 10 in order to reach the upper nearest reference size. Said padding step 10 consists in adding padded data (for example FFFF values) to the end of a compressed chunk CCi in order to increase the compressed chunk size CCSi until the upper nearest reference size.

Then, the padded compressed chunks and unpadded compressed chunks CCi are stored 4 in the storage memory SM in a manner such that no chunk is across more than a number of storage memory pages SMPi equal to ceil(r).

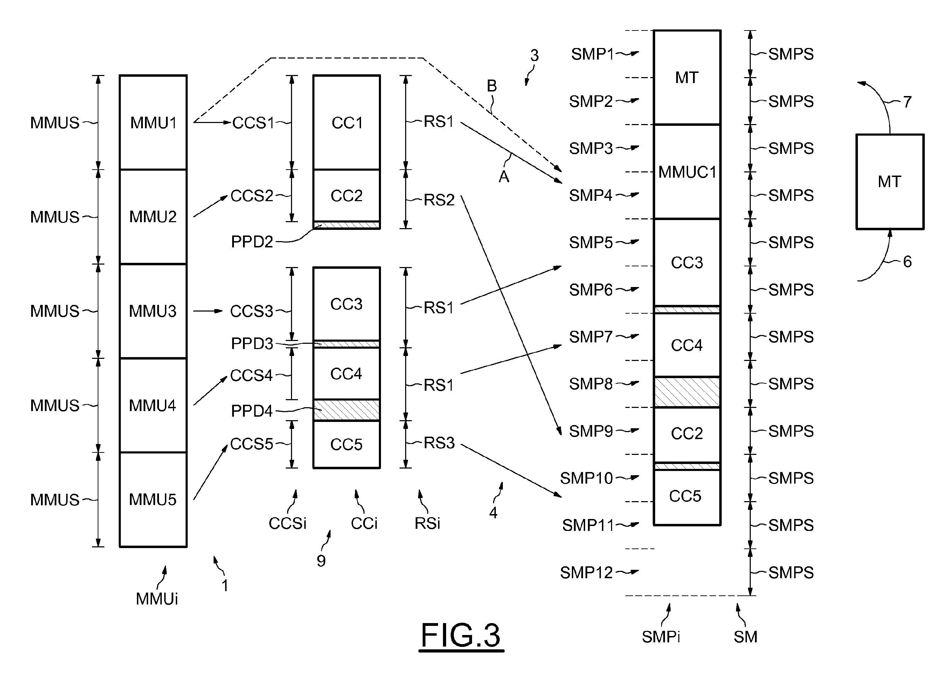

Referring now to figure 3, an example of the first variant is described more in details.

In figure 3, for simplification reasons, only five first memory pages MMU1 to MMU5 have been illustrated. Reference sign MMUCi designating the content of the corresponding first memory page MMUi.

In a same way, for simplification reasons, only twelve memory pages SMP1 to SMP12 have been illustrated.

Reference sign CCi designates one compressed chunk among five compressed chunks CC1 to CC5. Reference sign CCSi designates the size of the compressed chunk size, and reference sign RSi designates one reference size among a set of reference sizes.

For instance, first memory page size MMUS is equal to 4 kB (4 kilo Bytes), second memory page size SMPS is equal to 2 kB and reference sizes RSi can be chosen among the set of values equal to 4kB, 3kB, 2.5kB, 2kB, 1.5kB, 1kB and 0.5kB. In this case, RS1 is equal to 4kB, RS2 is equal to 2.5kB and RS3 is equal to 2kB. In figure 1, for example, compressed chunk sizes COS 1 to CCS5 are respectively equal to 4 kB, 2.2 kB, 3.7 kB, 3.1 kB and 2 kB.

The mapping table MT is for example stored 7 in the two first storage memory pages SMP1 and SMP2.

The first compressed chunk CC1 having a size COS1 equal to first memory page size MMUS, either the compressed chunk CC1 or maybe the content MMUC1 of the corresponding first memory page MMU1 is directly stored in the two storage memory pages SMP3 and SMP4 (references A and B).

Further, the compressed chunks CC2, CC3 and CC4, having a size different than one of the reference sizes, are padded 9 with padded data PDD2, PDD3, PDD4 to reach, for each of them, the nearest upper reference size. In other words, the second compressed chunk CC2 is padded 9 with a padded data size of 0.3 kB to reach the size RS2 of 2.5 kB. The third compressed chunk CC3 is padded with a padded data size of 0.3 kB to reach the size RS1 of 4 kB. The fourth compressed chunk CC4 is padded with a padded data size of 0.9 kB to reach the size RS1of 4 kB. The fifth compressed chunk CC5 having a size CCS5 equal to one of the reference size RS3 is not padded.

Padded compressed chunks, unpadded compressed chunks and first memory pages contents MMUCi can be ordered by size before being stored into storage memory pages SMPi. Said padded compressed chunks, unpadded compressed chunks and first memory pages contents MMUCi are also called thereafter elements.

Thus, for example, and not in a limitative way, all said elements can be stored in the following manner:

storing first all elements having a size equal to 4kB, then storing all elements having a size equal to 2kB, then storing all elements having a size equal to 3kB, then storing all elements having a size equal to 1kB, then storing all elements having a size equal to 2.5kB, then storing all elements having a size equal to 1.5kB., then storing all elements having a size equal to 0.5kB. This ordering ensures a more efficient storage with no compressed chunk extending across more than a number of storage memory pages SMPi equal to ceil(4/2) = 2.

Some other choices of reference sizes RSi that are suitable for ordering elements. The following set of reference sizes RSi could be: ceil(r), ceil(r)-1, ..., 2, 1, ½ 1/3, ¼...

Other choices of reference sizes RSi are possible, such as ceil(r), ceil(r)-½, ceil(r)-1, ... , 3/2, 1, ½, ¼.

More generally, but not in a limitative way, the reference sizes RSi can be chosen as being equal to m*S if $m \leq (ceil(r)\text{-}1) \cdot q$ or equal to $((ceil(r)\text{-}1) \cdot q + m) \cdot S$ if m is a divisor of q.

In these two formulae:

- S is a float such that SMPS is a multiple of S;
- q is an integer such that SMPS=q*S;
- m is an integer not null.

For example if MMUS=4 kB, SMPS=2 kB, and S=0.5, then, ceil(r)=2 and q=4. So the set of reference sizes RSi can be:

RS1 = 0.5 (with m=1 and RS1is equal to m*S)
RS2 = 1 (with m=2 and RS2 is equal to m*S)
RS3 = 1.5 (with m=3 and RS3 is equal to m*S)
RS4 = 2 (with m=4 and RS4 is equal to m*S)
RS5 = 2.5 (with m=1 (m being a divisor of q) and RS5 is equal to $((ceil(r)\text{-}1) \cdot q + m) \cdot S$)
RS6= 3 (with m=2 (m being a divisor of q) and RS6 is equal to $((ceil(r)\text{-}1) \cdot q + m) \cdot S$)
RS7 = 4 (with m=4 (m being a divisor of q) and RS7 is equal to $((ceil(r)\text{-}1) \cdot q + m) \cdot S$)

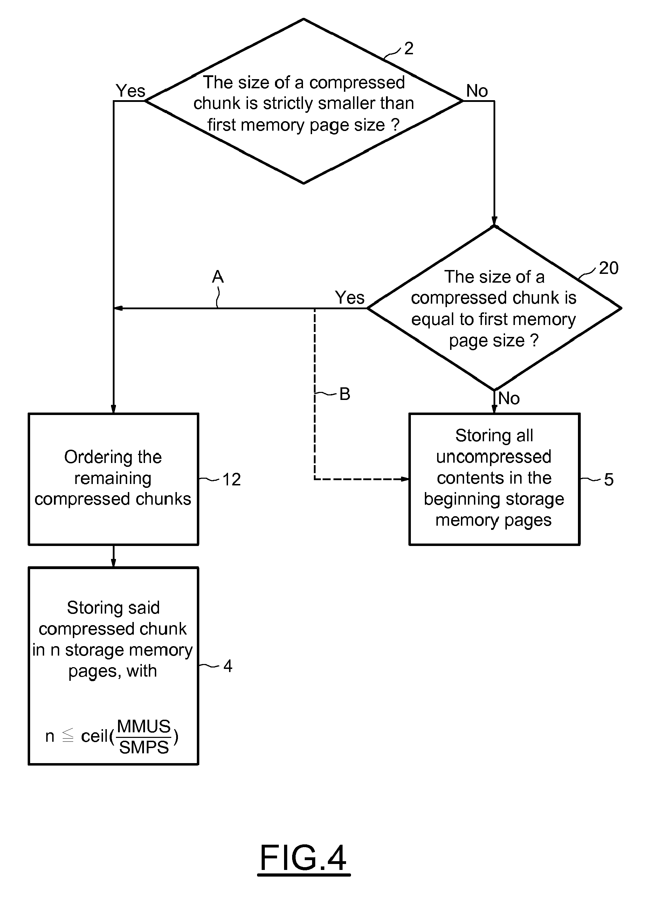

A second variant of the method according to the invention is illustrated in figure 4.

In this second variant, a set of several reference sizes RSi is not used.

In the storing step 5, all the uncompressed contents MMUCi are stored in the beginning storage memory pages SMPi (i.e. in the storage memory pages having for example addresses starting from 0) and all the remaining compressed chunks CCri are ordered 12 before being stored (step 4) in the following storage memory pages SMPi.

In this second variant, a compressed chunk having a size equal to MMUS may be included (arrow A) in said remaining compressed chunks CCri to be ordered (12) or may be stored directly in the storage memory after said beginning storage memory pages. Alternatively in such a situation, it is also possible to consider the corresponding uncompressed content and to store it directly in the storage memory after said beginning storage memory pages (arrow B).

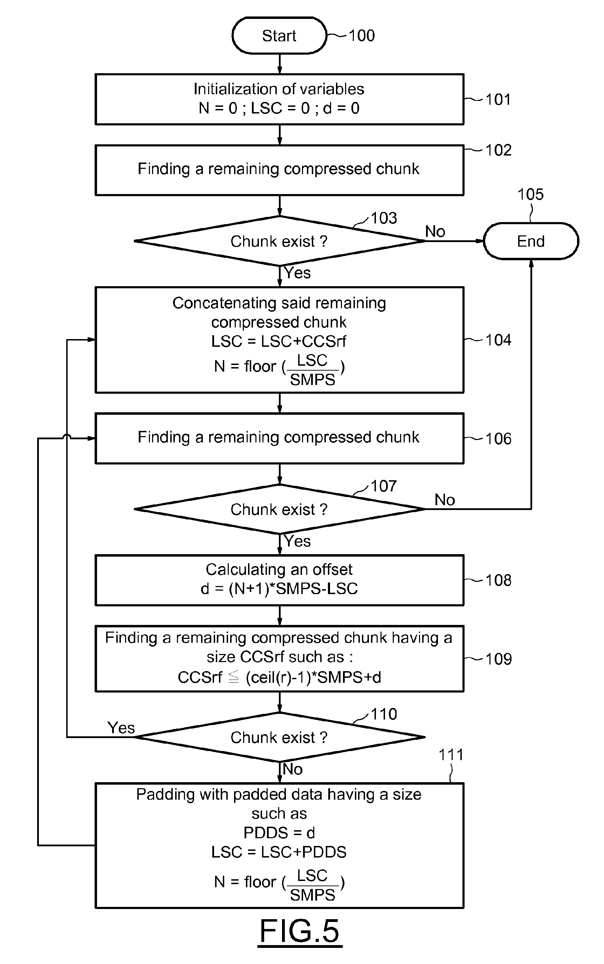

An example of the step 12 of ordering remaining compressed chunks CCi is now illustrated diagrammatically in figure 5.

The step 12 of ordering comprises elaborating a data string LS including concatenated remaining compressed chunks, before storing said compressed chunks in storage memory SM according to storing step 3 of said storing method.

The step 12 of ordering remaining compressed chunks CCri starts at step 100. After being executed the starting step 100, next step 101 of initialization is executed.

The step 101 of initialization comprises initializing variables LSC, N and d to zero.

LSC is the size of the data string LS;
N is the minimum number of storage memory page SMPi required to store said data string LS; and
d is an offset between the size of the N storage memory pages SMPi and the size LSC of the data string LS.

Then a finding step 102 is executed comprising finding a remaining compressed chunk CCri, among the remaining compressed chunks CCri which are not concatenated into the data string LS. For example, this finding step 102 comprises finding a remaining compressed chunk having the biggest size.

Then, a step 103 is executed, comprising testing if said remaining compressed chunk CCri exist. If there is such a remaining compressed chunk CCri, then a concatenating step 104 is executed, else the ordering step 12 ends (step 105).

When the step 12 of ordering is terminated, all remaining compressed chunks CCri are all concatenated in the data string LS and prepared to be stored in storage memory SM.

The concatenating step 104 comprises concatenating said founded remaining compressed chunk CCri with the included compressed chunk CCri into data string LS. Said concatenating step 104 comprises also updating variables such as:

$$LSC = LSC + CCSrf$$

$$N = floor\left(\frac{LSC}{SMPS}\right)$$

CCSrf is the size of the founded remaining compressed chunk; and
floor(x) is the mathematical function that returns the floor of x as a float, in other words it returns the largest integer value less than or equal to x.

After said concatenating step 104 has been executed, a finding step 106 is again executed for finding a remaining compressed chunk CCri.

Then, one more existing step 107 is executed for testing if at least one remaining compressed chunk CCri exists. If there is such a remaining compressed chunk CCri, then a calculating step 108 is executed, else the step 12 of ordering ends (step 105).

Said calculating step 108 comprises calculating the offset d such as:

$$d = (N+1)*SMPS - LSC$$

This offset permits to know if the next founded compressed chunk can be included in a number n of storage memory pages smaller than or equal to ceil(r).

Then, a finding step 109 is executed, comprising finding a remaining compressed chunk having a size CCSrf such as:

$$CCSrf \le (ceil(r)-1)*SMPS + d$$

Then, an existing step 110 is again executed for testing if there is such a remaining compressed chunk CCri. If there is such a remaining compressed chunk CCri, then said concatenating step 104 is again executed, else a padding step 111 is executed.

Said padding step 111 comprises elaborating padded data having a size PDDS such as PDDS = d.

Said padding step 111 comprises also updating variables such as:

$$LSC = LSC + PDDS$$

$$N = floor\left(\frac{LSC}{SMPS}\right)$$

Then, a finding step 106 is again executed.

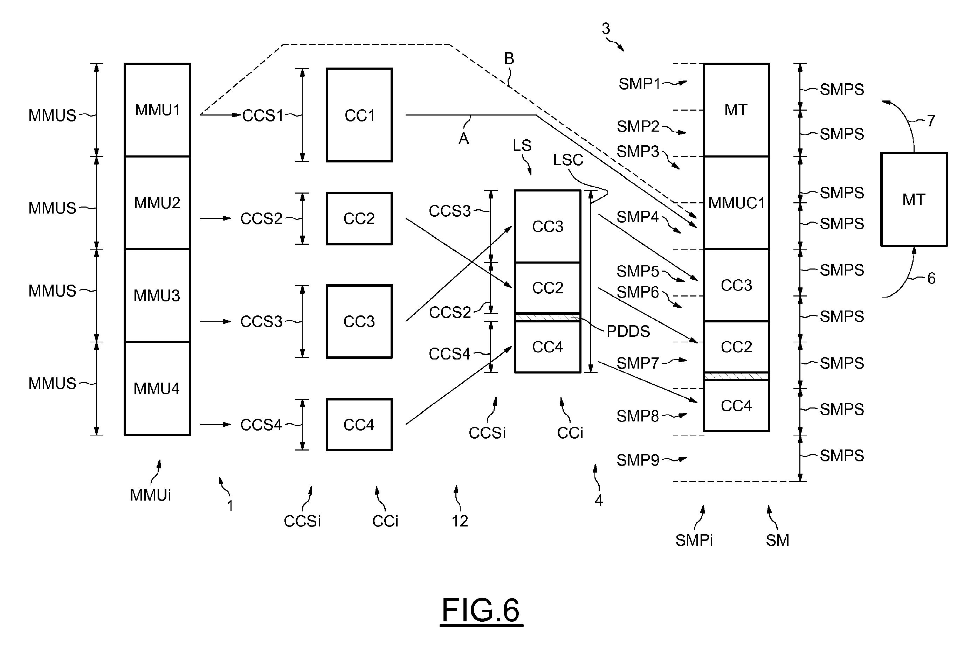

An example of said second embodiment is illustrated in figure 6.

In figure 6, for simplification reasons, only four first memory pages MMU1 to MMU4 and nine memory pages SMP1 to SMP9 have been illustrated.

For instance, first memory page size MMUS is equal to 4 kB (4 kilo Bytes) and second memory page size SMPS is equal to 2 kB.

In this case, compressed chunk sizes CCS1 to CCS4 are respectively equal to 4 kB, 2.2 kB, 3.7 kB, and 3.1 kB.

Thus, the first compressed chunk CM1 having a size CCS1 equal to first memory page size MMUS is not stored into the storage memory SM. On the contrary, the content MMUC1 of the corresponding first memory page MMU1 is stored in the two storage memory pages SMP3 and SMP4. The mapping table MT is then stored 7, for example, in the two first storage memory pages SMP1 and SMP2.

Further, the remaining compressed chunks CC2, CC3 and CC4 are ordered 12 before being stored 3 in storage memory pages SMPi. The execution of finding step 102 provides, for example, the third remaining compressed chunk CC3. Thus, said remaining compressed chunk CC3 is the first chunk included in the data string LS.

Then variables are updated (step 104) such as:

-

$$LSC = 3.7 \ kB$$

-

$$N = 1$$

Then, the current offset d is calculated (step 108):

-

$$d = 0.3 \ kB$$

Thus, a remaining compressed chunk CCri is found (step 109) having a size CCSrf such as:

-

$$CCSrf \le 2.3 \ kB.$$

The second compressed chunk CC2 is the founded remaining compressed chunk. Thus, said remaining compressed chunk CC2 is the second chunk included (step 104) in the data string LS.

Then variables are updated (step 104) such as:

-

$$LSC = 5.9 \ kB$$

-

$$N = 2$$

Then, the current offset d is calculated (step 108):

-

$$d = 0.1 \ kB$$

Then, a remaining compressed chunk CCri is found (step 109) having a size CCSrf such as:

-

$$CCSrf \le 2.1 \ kB.$$

Here, no such remaining compressed chunk exist, so the data string are padded (step 111) with padded data having a size PDDS such as: PDDS = 0.1 kB.

Then variables are updated (step 111) such as:

-

$$LSC = 6 \ kB$$

-

$$N = 3$$

When finding step 106 is executed again, a remaining compressed chunk CCri is found.

Then, the current offset d is calculated (step 108):

-

$$d = 2 \ kB$$

A remaining compressed chunk CCri is found (step 109) having a size CCSrf such as:

-

$$CCSrf \le 4 \ kB.$$

Here, a third compressed chunk CC4 is founded (step 109).

Then the last remaining compressed chunk CC4 is concatenated (step 104).

When no more compressed chunk is found (step 107), ordering step 12 ends (step 105).

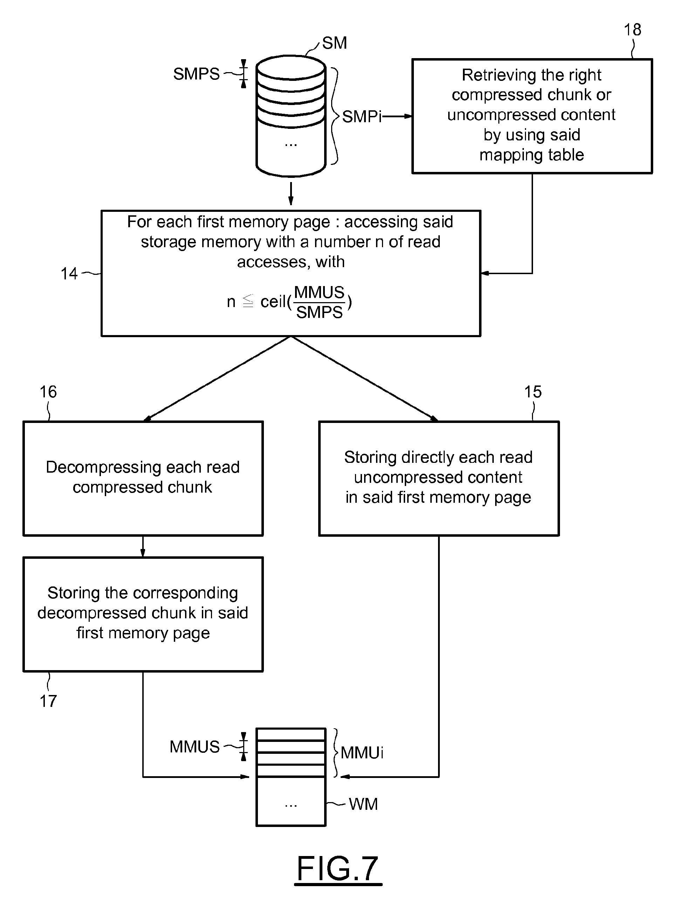

An embodiment of a method of transferring paged data, in particular read-only paged data as for example paged code, will be now explained more in details with reference to figure 7 in particular.

Said method transfers said paged data from a storage memory SM to a first memory WM. Said first memory WM can be a working memory including paged data to be used by process.

Said paged data have been stored, for example, in said storage memory SM by using the method of storing according to any one of embodiments defined above in figure 1 to 6.

Said first memory WM includes first memory pages MMUi having a first memory page size MMUS.

Further, said method comprises accessing 14, for each first memory page MMUi, said storage memory SM with a number n of read accesses smaller than or equal to ceil(r).

The accessing step 14 consists in extracting the content of storage memory pages SMPi and storing said content in first memory pages MMUi.

Advantageously, the step 14 of accessing may comprise retrieving 18 the right compressed chunk CCi or uncompressed content MMUCi stored in said storage memory pages SMPi by using the mapping table MT stored in the storage memory pages SMPi. Thanks to said mapping table MT, it is not necessary to access all storage memory pages SMPi for extracting the content of one ore more selected first memory pages. When accessing to mapping table MT, it is possible to get the location of the storage memory pages corresponding to the selected first memory pages.

For example, said mapping table MT can be accessed from storage memory once during boot time, thus improving even more the number of read accesses to memory.

Then, each read uncompressed content MMUCi is directly stored 15 in said first memory page MMUi or each read compressed chunk CCi is decompressed 16 before being stored 17 in said first memory page MMUi.

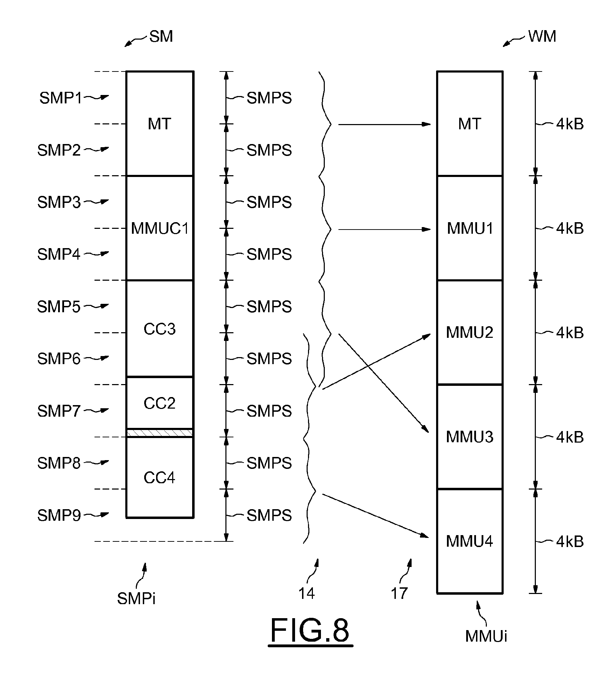

An example of said method of transferring paged data according to another embodiment is illustrated in figure 8.

In figure 8, for example, data have been stored in said storage memory pages SMPi according to the second embodiment defined above. For example, storage memory pages SMPi include a mapping table MT, an uncompressed content MMUC1, and three compressed chunks CC2 to CC4.

Said mapping table MT is first accessed by reading two storage memory pages SMP1 and SMP2 and can be stored in a first memory WM to be used during runtime by using read accesses directly from said first memory.

Then, said method of transferring comprises retrieving the right compressed chunk CC2 to CC4 or uncompressed content MMUC 1 stored in said storage memory pages SMPi corresponding to a first memory page MMU1 to MMU4.

Thus, for each first memory page MMU1 to MMU4, the corresponding storage memory pages SMPi, included in storage memory SM, is found.

For the first memory page MMU1, said uncompressed content MMU1 is read in the two storage memory pages SMP1 and SMP2, and then stored in corresponding first memory page MMU1.

For other first memory pages MMU2 to MMU4, said compressed chunks CC2 to CC4 accessed by reading two pages at most. As a matter of fact, in this example, ceil(r) is equal to 2.

Thus all read uncompressed contents MMUCi, and all decompressed read compressed chunks are stored in corresponding initial first memory pages MMUi. Said first memory pages are included in a first memory WM, for example in a working memory.

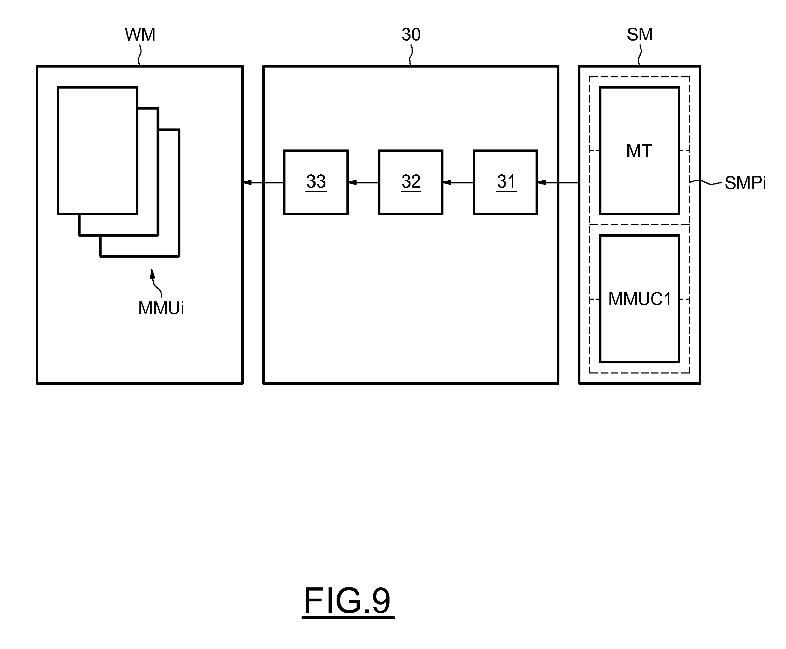

A device 30 for transferring paged data, in particular read-only paged data as for example paged code, according to another embodiment is illustrated in figure 9. Some reference signs of figure 1 and 2 have been reported to figure 9.

This device 30 transfers said paged data from a storage memory SM to a first memory WM, for example a working memory.

Said paged data having been stored, for example, in said storage memory SM by using the method of storing according to any one of embodiments defined above in figure 1 to 6.

Further, said first memory WM includes said first memory pages MMUi.

The device of transferring 30 comprises accessing means 31, decompressing means 32, and storing means 33.

The accessing means 31 is able to access, for each first memory page MMUi, said storage memory SM with a number of read accesses n smaller than or equal to ceil(r). When using n read accesses to storage memory SM, said accessing means 31 can extract content of n storage memory pages SMPi of said storage memory SM and transmit them to decompressing means 32.

The decompressing means 32 is able to decompress compressed chunk of each storage memory page SMPi and transmit decompressed chunks to storing means 33. Moreover, this decompressing means 32 is able to transmit each uncompressed content directly to said storing means 33.

The storing means 33 is able to store said uncompressed contents and said compressed chunks in said first memory page MMUi.

Some or all of these means can be realized for example by software modules within a microprocessor or by specific logic circuits.

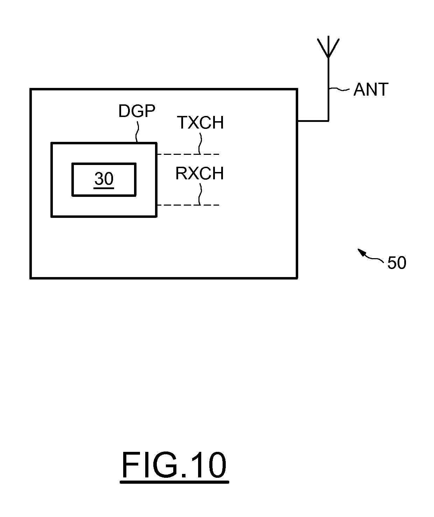

Referring now to figure 10, the device 30 for transferring paged data defined in figure 9 may for example be incorporated in the digital part DGP of a wireless communication apparatus 50 including an antenna ANT as well as a transmission chain TXCH and a receiving chain RXCH. Such a wireless communication apparatus may be for example a cellular mobile phone.

**Claims**

1. Method of storing paged data in a storage memory (SM), said paged data being included in first memory pages (MMUi) having a first memory page size (MMUS), said storage memory (SM) including storage memory pages (SMPi) having a second memory page size (SMPS), comprising compressing (1) separately the content of each first memory page (MMUi) into a compressed chunk (CCi), comparing each compressed chunk size (CCSi) to said first memory page size (MMUS), and if the size (CCSi) of a compressed chunk (CCi) is strictly smaller than said first memory page size (MMUS), storing (3) said compressed chunk (CCi) in a number of storage memory pages (SMPi) smaller than or equal to ceil(r), where r is the ratio between said first memory page size (MMUS) and said second memory page size (SMPS); whereas if the size (CCSi) of a compressed chunk (CCi) is greater than said first memory page size (MMUS), storing (3) directly the uncompressed content of said first memory page (MMUi) in a number of storage memory pages (SMPi) equal to ceil(r).

2. Method according to claim 1, wherein, if the size (CCSi) of a compressed chunk (CCi) is equal to said first memory page size (MMUS), storing (3) said compressed chunk (CCi), or storing (3) directly the uncompressed content of said first memory page (MMUi), in a number of storage memory pages (SMPi) equal to ceil(r).

3. Method according to claim 1 or 2, further comprising elaborating (3) a mapping table (MT) containing mapping information between the location of a compressed chunk (CCi), or an uncompressed content, within said storage memory (SM) and the corresponding first memory page (MMUi), and storing (4) said mapping table (MT) in said storage memory (SM).

4. Method according to any one of claims 1 to 3, wherein said storing step (3) comprises defining a set of reference sizes (RSi), and comparing for each compressed chunk (CCi) the size of said compressed chunk (CCi) to said reference sizes (RSi), and if the size (CCSi) of said compressed chunk (CCi) equals one of said reference sizes (RSi), storing said compressed chunk in said storage memory pages (SMPi), whereas if the size (CCSi) of said compressed chunk (CCi) does not equal one of said reference sizes (RSi), said storing step (3) further comprises padding said compressed chunk (CCi) with padding data to reach the nearest upper reference size and storing (3) said padded compressed chunk in said storage memory pages (SPMi).

5. Method according to any one of claims 1 to 3, wherein said storing step (3) comprises storing (5) all the uncompressed contents in the beginning storage memory pages (SMPi) and ordering (12) the remaining compressed chunks (CCri) before storing them in the following storage memory pages (SMPi).

6. Method according to claim 5, wherein said ordering step (12) comprises elaborating a data string (LS) including concatenated remaining compressed chunks (CCri).

7. Method of transferring paged data from a storage memory (SM) to a first memory (WM), said first memory (WM) including first memory pages (MMUi) having a first memory page size (MMUS), said storage memory (SM) including storage memory pages (SMPi) having a second memory page size (SMPS), said paged data being stored in said storage memory pages (SMPi) and including compressed chunks (CCi) or uncompressed contents, said method comprising, for each first memory page (MMUi), accessing (7) said storage memory (SM) with a number of read accesses smaller than or equal to ceil(r), where r is the ratio between said first memory page size (MMUS) and said second memory page size (SMPS), and storing directly each read uncompressed content in said first memory page (MMUi) or decompressing each read compressed chunk (CCi) before storing the corresponding decompressed chunk in said first memory page (MMUi).

8. Method according to claim 7, further comprising providing a mapping table (MT) stored in said storage memory pages (SMPi), said mapping table (MT) containing mapping information between the location of a compressed chunk (CCi), or an uncompressed content, within said storage memory (SM) and the corresponding first memory page (MMUi), and said method comprises retrieving the right compressed chunk (CCi) or uncompressed content stored in said storage memory pages (SMPi) by using said mapping table (MT).

9. Method according to claim 8, wherein said mapping table is shadowed at boot time.

10. Method according to any one of claims 7 to 9, wherein said paged data have been stored in said storage memory (SM) by using the method of storing according to any one of claims 1 to 5.

11. Device for transferring paged data (30) from a storage memory (SM) to a first memory (WM), said first memory (WM) including first memory pages (MMUi) having a first memory page size (MMUS), said storage memory (SM) including storage memory pages (SMPi) having a second memory page size (SMPS), said paged data being stored in said storage memory pages (SMPi) and including compressed chunks (CCi) or uncompressed contents, said device comprising means configured to access (31), for each first memory page (MMUi), said storage memory (SM) with a number of read accesses smaller than or equal to ceil(r), where r is the ratio between said first memory page size (MMUS) and said second memory page size (SMPS), means configured to store (33) directly each read uncompressed content in said first memory page (MMUi) and means configured to decompress (32) each read compressed chunk (CCi) before storing the corresponding decompressed chunk in said first memory page (MMUi).

**12.** Device according to claim 11, further including a mapping table (MT) stored in said storage memory pages (SMPi), said mapping table (MT) containing mapping information between the location of a compressed chunk (CCi), or an uncompressed content, within said storage memory (SM) and the corresponding first memory page (MMUi), and said accessing means (31) are further configured to retrieve the right compressed chunk (CCi) or uncompressed content stored in said storage memory pages (SMPi) by using said mapping table (MT).

**13.** Device according to claim 12, wherein said accessing means are configured to access said mapping table (MT) at boot time.

**14.** Device according to any one of claims 11 to 13, wherein said storage memory comprises paged data having been stored in said storage memory (SM) by using the method of storing according to any one of claims 1 to 5.

**15.** Wireless communication apparatus (50), comprising a device (30) according to any one of claims 11 to 14.

**16.** Wireless communication apparatus (50) according to claim 15, being a cellular mobile phone.

MMUS $\left\{\begin{array}{c}\end{array}\right.$ MMUi

1 — Compressing separately the content of each first memory page into a compressed chunk

6 — Elaborating a mapping table

The size of a compressed chunk is strictly smaller than first memory page size ? — 2

Yes | No

Storing said mapping table into said storage memory pages — 7

A

Yes | The size of a compressed chunk is equal to first memory page size ? — 20

No

3

B

Storing said compressed chunk in n storage memory pages, with — 4

$$n \leqq ceil(\frac{MMUS}{SMPS})$$

Storing directly the uncompressed content of said first memory page in N storage memory pages, with — 5

$$N = ceil(\frac{MMUS}{SMPS})$$

SM

SMPS $\left\{\begin{array}{c}\end{array}\right.$ SMPi

...

# FIG.1

The size of a compressed chunk is strictly smaller than first memory page size ? — 2

Yes

8 — Defining a set of reference sizes

3

The size of a compressed chunk equals one of said reference sizes? — 9

No → Padding said compressed chunk — 10

Yes

Storing said compressed chunk in n storage memory pages, with

$$n \leq \text{ceil}(\frac{\text{MMUS}}{\text{SMPS}})$$

— 4

# FIG.2

FIG.3

EP 2 200 029 A1

The size of a compressed chunk is strictly smaller than first memory page size ?    ~2

Yes

No

A

Yes

The size of a compressed chunk is equal to first memory page size ?    ~20

~B

No

Ordering the remaining compressed chunks    ~12

Storing all uncompressed contents in the beginning storage memory pages    ~5

Storing said compressed chunk in n storage memory pages, with

$$n \leq \operatorname{ceil}(\frac{MMUS}{SMPS})$$    ~4

## FIG.4

Start ~100

Initialization of variables
N = 0 ; LSC = 0 ; d = 0 ~101

Finding a remaining compressed chunk ~102

103
Chunk exist ? — No → End 105

Yes

Concatenating said remaining
compressed chunk
LSC = LSC+CCSrf
$N = floor(\frac{LSC}{SMPS})$ ~104

Finding a remaining compressed chunk ~106

107
Chunk exist ? — No
Yes

Calculating an offset
d = (N+1)*SMPS-LSC ~108

Finding a remaining compressed chunk having a
size CCSrf such as :
CCSrf $\leq$ (ceil(r)-1)*SMPS+d ~109

110
Yes ← Chunk exist ?

No

Padding with padded data having a size
such as
PDDS = d
LSC = LSC+PDDS
$N = floor(\frac{LSC}{SMPS})$ 111

## FIG.5

FIG.6

EP 2 200 029 A1

18

Retrieving the right
compressed chunk or
uncompressed content
by using said
mapping table

SM

SMPS

SMPi

For each first memory page : accessing said
storage memory with a number n of read
accesses, with

14

$$n \leq \text{ceil}(\frac{MMUS}{SMPS})$$

16

Decompressing each read
compressed chunk

15

Storing directly each read
uncompressed content
in said first memory page

Storing the corresponding
decompressed chunk in said
first memory page

17

MMUS

MMUi

... WM

## FIG.7

FIG.8

EP 2 200 029 A1

EP 2 200 029 A1

WM                          30                          SM

MMUi

33 ← 32 ← 31

MT

SMPi

MMUC1

<u>FIG.9</u>

DGP

TXCH

RXCH

30

ANT

50

# FIG.10

Europäisches
Patentamt
European
Patent Office
Office européen
des brevets

## EUROPEAN SEARCH REPORT

**Application Number**

EP 08 30 5995

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/138703 A (IBM [US]; IBM UK [GB]; CELI JOSEPH JR [US]) 20 November 2008 (2008-11-20) * page 2, line 23 - page 3, line 3 * * page 2, line 10 * * page 6, line 11 - line 13 * ----- | 1-16 | INV. G11B20/00 |

|  |  |
|---|---|
|  | TECHNICAL FIELDS SEARCHED (IPC) |
|  | G11B |

The present search report has been drawn up for all claims

| Place of search | Date of completion of the search | Examiner |
|---|---|---|
| The Hague | 13 March 2009 | Nowbakht Irani, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 200 029 A1

## ANNEX TO THE EUROPEAN SEARCH REPORT
## ON EUROPEAN PATENT APPLICATION NO.

EP 08 30 5995

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2009

| Patent document cited in search report | | Publication date | Patent family member(s) | Publication date |
|---|---|---|---|---|
| WO 2008138703 | A | 20-11-2008 | US 2008279462 A1 | 13-11-2008 |

EPO FORM P0459

For more details about this annex : see Official Journal of the European Patent Office, No. 12/82

22